(19) Europäisches Patentamt
European Patent Office
Office européen des brevets

(11) **EP 1 019 754 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(21) Anmeldenummer: **99940097.1**

(22) Anmeldetag: **30.07.1999**

(51) Int Cl.⁷: **G01V 3/15**, A63B 29/02

(86) Internationale Anmeldenummer:
**PCT/EP1999/005524**

(87) Internationale Veröffentlichungsnummer:
**WO 2000/008491 (17.02.2000 Gazette 2000/07)**

(54) **VERSCHÜTTETENSUCHGERÄT**

SEARCH DEVICE FOR LOCATING BURIED PERSONS

APPAREIL DE RECHERCHE DE PERSONNES ENSEVELIES

(84) Benannte Vertragsstaaten:
**AT BE CH CY DE DK ES FI FR GB GR IE IT LI LU MC NL PT SE**

(30) Priorität: **31.07.1998 DE 29813723 U**

(43) Veröffentlichungstag der Anmeldung:
**19.07.2000 Patentblatt 2000/29**

(73) Patentinhaber: **Eckhard, Christian**
**87724 Ottobeuren (DE)**

(72) Erfinder: **Eckhard, Christian**
**87724 Ottobeuren (DE)**

(74) Vertreter: **Sieckmann, Dirk Christoph**
**Betten & Resch**
**Patentanwälte**
**Postfach 10 02 51**
**80076 München (DE)**

(56) Entgegenhaltungen:
**EP-A- 0 855 600      EP-A- 0 857 497**
**DE-C- 19 510 875      GB-A- 1 577 742**
**US-A- 3 806 936**

**Beschreibung**

**[Stand der Technik]**

Verschüttetensuchgeräte, speziell für die Suche lawinenverschütteter Personen, auf der Basis von Sender - Empfängergeräten mit einer Frequenz von 457 kHz sind seit längerem in Gebrauch (vgl. Patentschrift DE 35 31 726 C2).

Diese Geräte haben durch die Ausbreitung des elektromagnetischen Feldes Ihrer Ferritstabantenne (vgl. Patentschrift DE 195 10 875 C1) und dem Umstand, daß dieses Signal nur mit einer Antenne empfangen wird, einen gravierenden Nachteil - nur bei paralleler Antennenstellung wird auch eine maximale Signalstärke bei der nächsten Entfernung zum Sender registriert. Bei einer senkrechten Stellung der beiden Antennen zueinander, kann es zu mehreren maximalen Signalstärken kommen, die nicht in nächster Entfernung zum Sender sind. Für die Verschüttetensuche ergibt sich daraus das Problem, daß mit äußerst komplizierten und zeitraubenden Methoden, die auch noch viel Übung bedürfen, diesem Umstand Rechnung getragen wird (vgl. "Die Alpen 11/1996" - Mitteilungen des Schweizer Alpenclubs).

Die Erfindung aus Patentschrift DE 195 10 875 C1 erweist sich ebenfalls als wenig praktikabel, da erstens drei Sendeantennen senkrecht aufeinander stehen, wodurch ein derartiges Gerät sehr voluminös, und dadurch unmöglich am Körper zu tragen wäre, und zweitens eine Funktion nur sichergestellt wäre, wenn Sender und Empfänger vom gleichen Typ sind, was eine Integration in die bestehenden und weit verbreiteten Gerätetypen ausschließt.

Neuere Gerätetypen, die zwei aufeinander senkrecht stehende Antennen verwenden (vgl. Patentschrift EP 0 855 600 A2), verbessern lediglich die erste Phase der Verschüttetensuche. Eine genaue Punktortung kann ebenfalls nicht erreicht werden.

**[Aufgabe der Erfindung]**

Ziel der Erfindung ist es, ein Verschüttetensuchgerät so auszugestalten, daß es den Suchenden einfach und möglichst genau zum Verschütteten hinführt und daß dies auch mit den bereits erwähnten weit verbreiteten Gerätetypen der Fall ist.

**[Beschreibung der Erfindung]**

Die Erfindung macht sich dabei zwei Umstände zu Nutzen:

1. Die induzierte Spannung einer Spule (= Antenne) im Magnetfeld beruht auf dem physikalischen Gesetz:

$$U = \mu_0 \, N \, H \, \Delta A$$

$$\Delta A = A \cos \alpha$$

U: Induzierte Spannung

$\mu_0$: Induktionskonstante

N: Anzahl der Windungen

H: Feldstärke

A: Spulenfläche senkrecht zum Magnetfeld

$\alpha$: Winkel der Spulenfläche zur Senkrechten zum Magnetfeld

Daraus läßt sich erkennen, daß die induzierte Spannung vom Winkel der Spule zum Magnetfeld abhängt. Folglich kann man mit zwei gleichen Spulen, die sich in einem bestimmten Winkel zueinander 4, einer Ebene befinden, durch Vergleich ihrer induzierten Spannungen, die Richtung des Magnetfeldes ermitteln.

Wie in Patentschrift DE 195 10 975 C1 beschrieben, breitet sich das Magnetfeld einer Sendeantenne elipsenförmig aus. Werden nun die beiden Empfängerspulen, die sich in einem bestimmten Winkel zueinander und ihre Längsachsen je parallel zur Erdoberfläche befinden, stets so ausgerichtet, daß beide induzierten Spannungen gleich groß sind und bewegt man sich dann in Richtung der Winkelhalbierenden vorwärts, kommt man bei stetiger Ausrichtung entlang von sogenannten Feldlinien zur Senderspule.

Je näher man jedoch zur Senderspule kommt, um so ausschlaggebender wird die Entfernung zwischen Sender und Erdoberfläche und die Entfernung zwischen Erdoberfläche und Empfänger.

2. Aus Patentschrift DE 35 31 726 C2 ist bekannt, daß die magnetische Feldstärke abhängig von der Entfernung zur Senderspule ist.

Stehen also zwei Empfängerspulen in einem bestimmten Winkel zueinander und ist die Längsachse der Senderspule parallel zur Winkelhalbierenden der Empfängerspulen, so liefert die der Senderspule nähere Empfängerspule die größere induzierte Spannung.

Somit läßt sich mit zwei Empfängerspulen, die sich in einem bestimmten Winkel zueinander befinden und zwei weiteren Empfängerspulen, die sich auch in einem bestimmten Winkel zueinander und sich zugleich in einem bestimmten Winkel zum ersten Spulenpaar befinden, eine einzelne Senderpule unabhängig von ihrer Lage zu den Empfängerspulen genau orten, denn nur in kürzester Entfernung zur Senderspule sind alle vier Signale der Empfägerspulen am stärksten und gleich groß.

Die Umwandlung der induzierten Spannungen der Empfängerspulen in Signalgrößen erfolgt mit einer für diesen Zweck üblichen elektronischen Schaltung. Die Auswertung kann analog erfolgen z. B. mit mehreren Drehspulmeßinstrumenten wobei eines die Tendenz der Magnetfeldrichtung anzeigt, indem es die Signalstärke der Antennen 1(1) und 2(2) addiert und je nach positivem oder negativem Vorzeichen nach links oder rechts ausschlägt oder die Signalstärken der Antennen 1(1) und 3(3) addiert und dann zur Summe der Antennen 2(2) und 4(4) addiert und dann je nach positivem oder negativem Vorzeichen nach links oder rechts ausschlägt.

Ein weiteres Drehspulmeßinstrument kann dazu benutzt werden, um durch Vergleich der Summen der Signale 1 und 4 und der Signale 2 und 3 eine seitliche Abweichung im Nahbereich anzuzeigen. Mit einem dritten Drehspulmeßinstrument kann durch Vergleich der Summen der Signale 1 und 2 und der Signale 3 und 4 die Lage des Verschütteten vor oder hinter dem Suchenden detektiert werden.

Weitaus komfortabler ist jedoch eine Umwandlung in digitale Daten und eine Berechnung mit einem Mikroprozessor. Die Anzeige kann dabei über Leuchtdioden oder Flüssigkristallanzeige erfolgen.

In beiden Fällen wird aber das Signal zusätzlich noch akustisch ausgegeben und zwar mit steigender Lautstärke bei steigender Signalstärke zur Verdeutlichung der Annäherung des Suchenden zum Verschütteten. Dabei kann die Verstärkung verändert werden, damit eine Lautstärkeänderung leichter wahrgenommen werden kann.

Damit das Gerät auch als Sender verwendet werden kann, wird eine Empfängerspule als Sendeantenne geschaltet über die dann Signale mit der genormten Frequenz von 457 kHz ausgesendet werden.

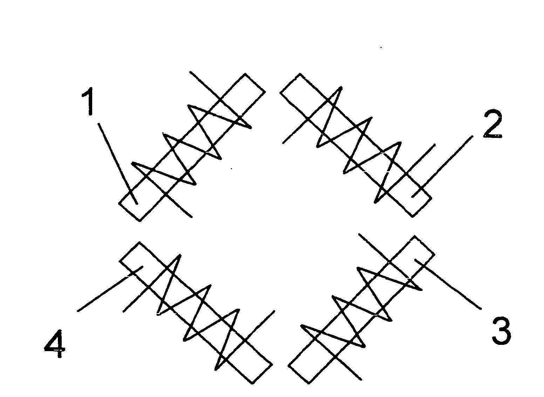

**[Beschreibung der Zeichnung]**

Die anhängende Zeichnung zeigt eine mögliche Anordnung der vier Antennen, wobei die Antennen 1(1) und 3(3) ein, wie in der Beschreibung genanntes Antennenpaar bilden und die Antennen 2(2) und 4(4) ein Antennen paar bilden.

**Patentansprüche**

1. Verschüttetensuchgerät nach dem Sender - Empfänger Prinzip zur Suche nach verschütteten Personen, insbesondere Lawinenverschütteten Personen, aufweisend vier Antennen, wobei die Antennen in einer Ebene angeordnet sind, eine erste und eine dritte Antenne (1, 3) im Wesentlichen parallel und beabstandet zueinander angeordnet sind und ein erstes Antennenpaar bilden, eine zweite und eine vierte Antenne (2, 4) im Wesentlichen parallel und beabstandet zueinander angeordnet sind und ein zweites Antennenpaar bilden und die Antennenpaare so zueinander angeordnet sind, dass jeweils die Längsachsen einer Antenne des ersten Antennenpaares mit einer Antenne des zweiten Antennenpaares sowie die jeweils andere Antenne des ersten Antennenpaares mit der jeweils anderen Antenne des zweiten Antennenpaares voneinander beabstandete bestimmte Winkel und die Antennen Abschnitte jeweils einer Seite eines im wesentlichen gleichseitigen Vierecks bilden; und das Gerät zwischen einem Sender- und einem Empfänger-Modus umschaltbar ist und in dem Empfänger-Modus alle vier Antennen als Empfangsantennen geschaltet sind.

2. Das Gerät nach Anspruch 1, wobei die Winkel zwischen den Antennen in der Ebene veränderbar sind.

3. Das Gerät nach einem der Ansprüche 1 oder 2, wobei im Sender-Modus eine Antenne als Sendeantenne geschaltet ist.

4. Das Gerät nach einem der vorgehenden Ansprüche, wobei zumindest eine der Antennen eine Spule mit spiralförmiger Wicklung um einen Kern ist.

5. Das Gerät nach einem der vorgehenden Ansprüche, weiterhin aufweisend Auswertemittel zum Auswerten der im Empfänger-Modus in den Antennen empfangenen Signale, wobei die Signalstärke der ersten und der zweiten Antenne addiert oder zunächst die Signalstärken der ersten und der dritten Antenne summiert und dann zur Summe der Signalstärken der zweiten und der vierten Antenne addiert werden.

6. Das Gerät nach Anspruch 5, weiterhin aufweisend ein erstes Vergleichsmittel zum Vergleichen der Summen jeweils der Signale der ersten und der vierten Antenne und der Signale der zweiten und der dritten Antenne.

7. Das Gerät nach Anspruch 5 oder 6, weiterhin aufweisend ein zweites Vergleichsmittel zum Vergleichen der Summen jeweils der Signale der ersten und der zweiten Antenne und der Signale der dritten und der vierten Antenne.

8. Das Gerät nach einem der Ansprüche 5 bis 7, wobei die Auswertemittel einen Mikroprozessor umfassen und im Empfänger-Modus ein Empfängersignal optisch über Leuchtdioden oder Flüssigkristallanzeige und/oder akustisch ausgegeben wird.

9. Das Gerät nach einem der vorgehenden Ansprüche, wobei es weiterhin ein Funktelefon umfaßt.

## Claims

1. Locating device of the transmitter-receiver principle for searching of buried persons, in particular persons buried by avalanches, comprising four antennae arranged in a plane, a first and a third antenna (1, 3) being substantially arranged in parallel and spaced apart from each other and forming a first pair of antennae, a second and a fourth antenna (2, 4) being substantially arranged in parallel and spaced apart from each other and forming a second pair of antennae, and the pairs of antennae being arranged to each other in a manner that the longitudinal axis of an antenna of the first pair of antennae with an antenna of the second pair of antennae as well as the respective other antenna of the first pair of antennae with the respective other antenna of the second pair of antennae forming definite angles being arranged spaced apart from each other and the antennae each forming a portion of a side of a substantially equal sided quadrangle; and wherein the device is capable to switch over between a transmitter and a receiver mode and all four antennae being operated as receiving antennae in the receiver mode.

2. The device according to claim 1, wherein the angles between the antennae are changeable in the plane.

3. The device according to claim 1 or 2, wherein one antenna is operated as a transmission antenna in the transmission mode.

4. The device according to one of the preceding claims, wherein at least one of the antennae is a coil with a spiral winding around a core.

5. The device according to one of the preceding claims, further comprising evaluation means for evaluating signals received by the antennae in the receiving mode, wherein the strength of the signals received by the first and second antennae are added or first the strength of the signals of the first and third antennae are summed and then are added to the sum of the strength of the signals of the second and fourth antennae.

6. The device according to claim 5 further comprising a first comparison means for comparing the sums of the signals of the first and fourth antenna with the signals of the second and third antenna.

7. The device according to claim 5 or 6, further comprising a second comparison means for comparing the sums of the signals of the first and second antenna with the signals of the third and fourth antenna.

8. The device according to one of the claims 5 to 7, wherein the evaluation means comprises a microprocessor and in the receiver mode a receiving signal is output optically by light emitting diodes or a liquid crystal display and/or acoustically.

9. The device according to one of the preceding claims, further comprising a mobile phone.

## Revendications

1. Appareil de recherche des personnes ensevelies selon le principe émetteur-récepteur pour la recherche des personnes ensevelies, en particulier des personnes ensevelies par avalanches, comportant quatre antennes étant arrangées selon un plan, une première et une troisième antenne (1, 3) étant arrangées essentiellement en parallèle et écartée l'une de l'autre et formant une première paire d'antennes, une deuxième et une quatrième antenne (2, 4) étant arrangées essentiellement en parallèle et écartée l'une de l'autre formant une deuxième paire d'antennes et les paires d'antennes étant arrangées de sorte que les axes longitudinales d'une antenne de la première paire d'antennes, avec une autre antenne de la deuxième paire d'antennes ainsi que l'autre antenne respective de la première paire d'antennes, avec l'autre antenne respective de la deuxième paire d'antennes, forment des angles définis et écartés, et les antennes formant chacune une section d'une côté d'un quadrilatère étant essentiellement équilatéral; et l'appareil étant commutable entre un mode émetteur et un mode récepteur et, dans le mode récepteur, toutes les quatre antennes étant commutées comme antennes de réception.

2. L'appareil selon revendication 1, les angles entre les antennes étant changeables selon ledit plan.

3. L'appareil selon une des revendications 1 ou 2, une antenne dans le mode émetteur étant commutée comme antenne d'émission.

4. L'appareil selon une des revendications précédentes, au moins une des antennes étant une bobine avec un bobinage en spiral autour d'un noyau.

5. L'appareil selon une des revendications précédentes, comportant en outre un moyen d'évaluation pour évaluer les signaux étant reçus par les antennes dans le mode récepteur, les intensités des signaux reçus par la première et deuxième antenne étant additionnées ou d'abord les intensité des signaux de la première et la troisième antenne étant additionnées et étant additionnées à la somme des intensités des signaux de la deuxième et quatrième antenne.

6. L'appareil selon la revendication 5, comportant en outre une première moyen de comparaison pour comparer les sommes des signaux de la première et de la quatrième antenne et des signaux de la deuxième et troisième antenne, respectivement.

7. L'appareil selon la revendication 5 ou 6, comportant en outre un deuxième moyen de comparaison pour comparer les sommes des signaux de la première et de la deuxième antenne et des signaux de la troisième et quatrième antenne, respectivement.

8. L'appareil selon une des revendications 5 à 7, les moyens d'évaluation comportant un microprocesseur et dans le mode récepteur un signal de réception est émis optiquement par le biais de diodes électroluminescentes ou par affichage à cristaux liquides et/ou acoustiquement.

9. L'appareil selon une des revendications précédentes, comportant en outre un téléphone portable.